# EUROPEAN PATENT SPECIFICATION

(11) **EP 3 464 707 B1**
(45) Date of publication and mention of the grant of the patent: **04.08.2021**
(21) Application number: 17807576.8
(22) Date of filing: 02.06.2017
(51) Int. Cl.: D06H 3/10, C04B 35/80, C04B 35/628

(54) **QUALIFICATION AND REPAIR STATION**
QUALIFIZIERUNGS- UND REPARATURSTATION
POSTE DE QUALIFICATION ET DE RÉPARATION

(30) Priority: 02.06.2016 US 201662344966 P
(43) Date of publication of application: 10.04.2019
(73) Proprietor: Applied Materials, Inc., Santa Clara, CA 95054 (US)
(72) Inventor: SCHMID, Andreas, 3280 Meyriez (CH); BURROWS, Brian, San Jose California 95128 (US); ISHIKAWA, David, Mountain View California 94040 (US); YUDOVSKY, Joseph, Campbell California 95008 (US)
(74) Representative: Zimmermann & Partner Patentanwälte mbB
(86) International application number: PCT/US2017/035707
(87) International publication number: WO 2017/210571

(56) References cited:
- WO-A1-2015/126338
- JP-A- 2010 180 516
- US-A- 5 437 082
- US-A1- 2011 017 381
- US-B2- 7 867 554

## Description

### FIELD

Embodiments of the present disclosure generally relate to continuous tow processing systems and in particular to systems for qualification and repair of individual filament defects in a multi-filament tow prior to depositing coatings on a tow material.

### BACKGROUND

Ceramic matrix composites (CMCs) are comprised of ceramic fibers embedded in a ceramic matrix. CMCs were developed to address limitations with conventional technical ceramics that prohibit use at high-temperatures and in oxidizing environments. Conventional unreinforced technical ceramics, including alumina, silicon carbide, aluminum nitride, silicon nitride, and zirconia, have low crack resistance and therefore fracture easily under mechanical and thermo-mechanical loading. These material limitations can be addressed by integrating multi-strand long ceramic fibers to enable greater elongation to rupture, fracture toughness, thermal shock resistance, and dynamic fatigue resistance.

Non-oxide polycrystalline ceramic fiber, typically silicon carbide (SiC) fiber, is used as continuous-length structural reinforcement in ceramic matrix composites (CMC). SiC-based ceramic fiber for CMC manufacture has small diameter, high thermal conductivity, low surface roughness, and a carbon-free surface. Furthermore, SiC-based ceramic fiber has high tensile strength as-produced, at high temperature, under high mechanical stress, and in oxidizing environments.

Chemical vapor infiltration (CVI) is used to produce an environmental barrier in the form of a thin conformal encapsulation layers on ceramic fibers. In general, the coated fiber has mechanical, thermal, and chemical advantages to un-coated fiber. Boron nitride (BN) and carbon-containing crack-deflecting interfacial coatings on SiC-based fiber surfaces improve SiC-based fiber oxidation resistance at high temperatures. US 7 867 554 B2 relates to boron nitride coated fibers and composite articles containing same. A method of coating fibers comprises removing a sizing on a plurality of fibers by heating the plurality of fibers in a reactor.

However, the inventors have observed that defects such as broken or loose filaments and non-uniformities in the polyvinyl acetate (PVA) coating on the multi-filament SiC tow (e.g., an untwisted bundle of continuous filaments) can cause perturbations in the coating process. Such perturbations can lead to problems such as non-uniform coating thickness and filaments sticking together. Furthermore, broken or loose filaments will create fuzz in the tow transport system which can cause further filament breakage and tow rupture.

Accordingly, the inventors have provided improved apparatus for qualification and repair of multi-filament tow.

### SUMMARY

Apparatus for qualification and repair of multi-filament tow are provided herein. In some embodiments, an apparatus for inspecting and repairing a multi-filament tow includes a first spool having a multi-filament tow wound on the first spool; a first tow tensioner following the first spool to impart a predetermined tension on the multi-filament tow; a de-sizing chamber comprising a heater to heat the multi-filament tow to a first temperature suitable for removing a coating on the multi-filament tow; an inspection chamber configured to inspect the multi-filament tow for defects; a repair chamber configured to repair the defects in the multi-filament tow; a second tow tensioner following the repair chamber to impart a predetermined tension on the multi-filament tow; and a second spool following the second tow tensioner to collect the multi-filament tow.

In some embodiments a method of inspecting and repairing a multi-filament tow, includes de-spooling a multi-filament tow from a first spool; heating the multi-filament tow to a first temperature suitable for removing a coating on the multi-filament tow in a de-sizing chamber; inspecting individual filaments of the multi-filament tow for defects in an inspection chamber; if a defective filament is found, repairing the defective filament in a repair chamber or removing the defective filament from the multi-filament tow; and spooling the multi-filament tow exiting the repair chamber onto a second spool.

In some embodiments, an apparatus for inspecting and repairing a multi-filament tow includes a first spool having a multi-filament tow wound on the first spool; a first motor coupled to the first spool to rotate the first spool and unwind the multi-filament tow from the first spool; a first tow tensioner following the first spool to impart a predetermined tension on the multi-filament tow; a first pitch control in-line with the first spool, between the first spool and the first tow tensioner, to allow the multi-filament tow to de-spool in a controlled manner; a first tension sensor in-line with the first spool, between the first pitch control and the first tow tensioner to measure a force induced on the multi-filament tow by the first tow tensioner a de-sizing chamber comprising a heater to heat the multi-filament tow to a first temperature suitable for removing a coating on the multi-filament tow; a first pulley in-line with the first spool between the first tow tensioner and the de-sizing chamber; an inspection chamber configured to inspect the multi-filament tow for defects; a repair chamber configured to repair the defects in the multi-filament tow; a second tow tensioner following the repair chamber to impart a predetermined tension on the multi-filament tow; a second pulley in-line with the first spool between the repair chamber and the second tow tensioner; a second tension sensor in-line with the second pulley and following the second tow tensioner to measure a force induced on the multi-filament tow by the second tow tensioner; a second pitch control in-line with the second pulley and following second tension sensor to allow the multi-filament tow to spool onto a second spool in a controlled manner; a second spool following the second tow tensioner to collect the multi-filament tow; and a second motor coupled to the second spool to rotate the second spool and wind the multi-filament tow onto the second spool.

Other and further embodiments of the present disclosure are described below.

### BRIEF DESCRIPTION OF THE DRAWINGS

Embodiments of the present disclosure, briefly summarized above and discussed in greater detail below, can be understood by reference to the illustrative embodiments of the disclosure depicted in the appended drawings. However, the appended drawings illustrate only typical embodiments of the disclosure and are therefore not to be considered limiting of scope, for the disclosure may admit to other equally effective embodiments.
Figure 1 depicts a schematic of an apparatus for qualification and repair of multi-filament tow in accordance with some embodiments of the present disclosure.
Figure 2 depicts a flowchart illustrating a method of inspecting and repairing a multi-filament tow in accordance with some embodiments of the present disclosure.

To facilitate understanding, identical reference numerals have been used, where possible, to designate identical elements that are common to the figures. The figures are not drawn to scale and may be simplified for clarity. Elements and features of one embodiment may be beneficially incorporated in other embodiments without further recitation.

### DETAILED DESCRIPTION

Embodiments of the present disclosure advantageously provide improved apparatuses for qualification and repair of multi-filament tow. Embodiments of the present disclosure advantageously identify and remove or repair defects of individual filaments prior to exposing the multi-filament tow to a barrier coating process. Embodiments of the present disclosure advantageously provide improved uptime, throughput, and yield as well as improved quality tow.

For example, embodiments of the present invention provide an automated system for qualifying incoming ceramic tow for subsequent environmental barrier formation via chemical vapor infiltration. Conventional equipment for ceramic tow chemical vapor infiltration (CVI) relies on in situ repair at the time of tow break or tow jump, resulting in low CVI system productivity. Embodiments of the present invention improve CVI system performance by qualifying and repairing tow *ex situ* (in advance of initiating the CVI process). Tow, specifically SiC-based ceramic fiber, is de-spooled from a conventional spool (or bobbin), desized (stripped of poly-vinyl acetate (PVA), poly-vinyl alcohol, epoxy, PVA blended with polyethylene oxide), optically characterized for breaks, breaks repaired using various polymer splicing technology, and then transferred to a processing reel and/or otherwise conveyed to the CVI process.

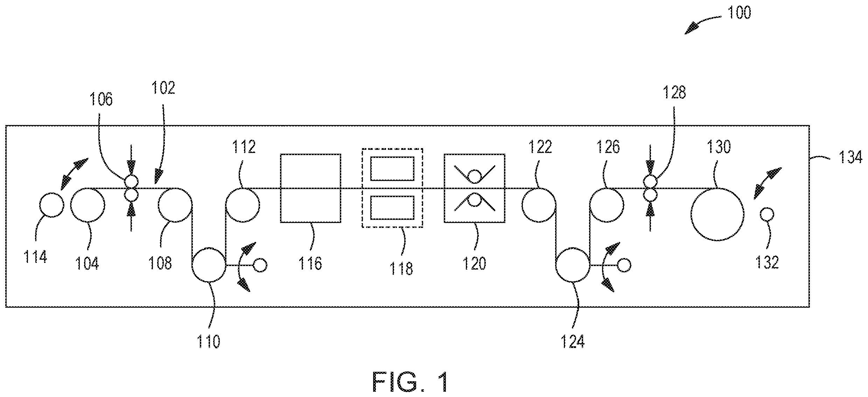

Figure 1 depicts an example of a system 100 for qualification and repair of multi-filament tow in accordance with some embodiments of the present disclosure. In some embodiments, the multi-filament tow is a bundle of continuous filaments, for example ceramic fibers (e.g., alumina, silicon carbide, aluminum nitride, silicon nitride, zirconia). In some embodiments, the system 100 is within an enclosure 134 that can be evacuated to allow the system 100 to run under a vacuum to avoid chemical reaction between the atmosphere and the multi-filament tow 102. In some embodiments, the temperature and the humidity within the enclosure can be regulated in order to minimize oxidation of the multi-filament tow 102.

The system 100 comprises a multi-filament tow 102, wound on a first spool 104. The first spool 104 is coupled to a first motor 114 to rotate the spool and unwind the multi-filament tow 102 from the first spool 104. The multi-filament tow 102 passes through a first pitch control 106 which controls the de-spooling of the multi-filament tow 102 to minimize or prevent damage to the multi-filament tow 102 and to allow the individual filaments in the multi-filament tow 102 to maintain their position relative to each other during de-spooling. In some embodiments, the first pitch control 106 is positioned with respect to the first spool 104 to maintain the multi-filament tow 102 in a substantially horizontal orientation. In some embodiments, the first pitch control 106 comprises opposing pulleys or rollers that rotate as the multi-filament tow 102 passes through. The distance between the opposing pulleys is dependent on the thickness of the multi-filament tow 102. In some embodiments, the first pitch control 106 further comprises a sensor to measure the length (i.e., amount) of the tow that has passed through the first pitch control 106.

The system 100 further comprises a first tension sensor 108. In some embodiments, the multi-filament tow 102 passes from the first pitch control 106 to the first tension sensor 108. In some embodiments, the first tension sensor 108 is positioned approximately level with the first spool 104 such that the multi-filament tow 102 travels substantially horizontally from the first spool 104 to the first tension sensor 108. In some embodiments, the first tension sensor 108 is a tension strain gauge coupled to an idler pulley to measure the force on the multi-filament tow 102.

In some embodiments, a first tow tensioner 110 is provided to control the tension on the multi-filament tow 102. For example, in some embodiments, the first tow tensioner 110 provides about 0.4 Newton of tension on the multi-filament tow 102 as measured by the first tension sensor 108. In some embodiments, the first tow tensioner 110 is placed below the height of the first tension sensor 108. In some embodiments, the first tow tensioner 110 is a pulley having a movable axial position in order to increase or decrease the tension on the multi-filament tow 102. In some embodiments, the first tow tensioner 110 is coupled to a third motor that moves the first tow tensioner 110 to control the linear distance between the first tow tensioner 110 and the first tension sensor 108. For example, increasing the distance between the first tow tensioner 110 and the first tension sensor 108 idler pulley will increase the tension on the multi-filament tow 102 while decreasing the distance between the first tow tensioner 110 and the first tension sensor 108 idler pulley will decrease the tension on the multi-filament tow 102. Tension control during spooling and unspooling provides uniform conditions for de-sizing, inspection, repair and re-spooling. In some embodiments, the first tow tensioner 110 is configured to move in a substantially vertical direction. Figure 1 shows the first tow tensioner 110 placed a first vertical distance below the height of the first tension sensor 108; however, the first tow tensioner 110 may alternatively be placed above the first tension sensor 108, with the multi-filament tow 102 wrapped around the idler pulley in the opposite direction.

The multi-filament tow 102 passes over a first pulley 112, which may for example be at about the height of the first spool 104, and into a de-sizing chamber 116. Within the de-sizing chamber 116, the multi-filament tow 102 is heated to a temperature of about 500 to about 1000 degrees Celsius to remove the polyvinyl acetate (PVA) coating on the multi-filament tow 102. The PVA coating holds the individual filaments in a bundle. The de-sizing chamber 116 may heat the multi-filament tow 102 using any suitable heating mechanism capable of heating the multi-filament tow 102 to about 500 to about 1000 degrees Celsius, such as a heat exchanger, heat lamps, or the like.

Once the PVA coating is removed, the multi-filament tow 102 passes through an inspection chamber 118 and then through a repair chamber 120. Within the inspection chamber 118, the multi-filament tow 102 is inspected for defects such as breaks in individual filaments in the multi-filament tow 102. The inspection chamber 118 uses an optical detection process for identifying and quantifying defects in the multi-filament tow 102. In some embodiments, the defective filaments may be physically marked or the location of the defective filaments may be measured, for example in meters or other suitable units, and recorded. Within the repair chamber 120 the identified defect is repaired or removed. For example, in some embodiments, a broken filament is removed from the multi-filament tow 102 and guided to a reject path for disposal or, if possible, to be re-spooled and re-used.

Upon exiting the repair chamber 120, multi-filament tow 102 passes over a second pulley 122, which for example may be at the height of the first spool 104, and to a second tow tensioner 124. The second tow tensioner 124 may be placed below the height of the second pulley 122. In some embodiments, the second tow tensioner 124 is a pulley having a movable axis to control the distance between the second tow tensioner 124 and the second pulley 122. In some embodiments, the second tow tensioner 124 provides about 0.4 Newton of tension on the multi-filament tow 102 as measured by the second tension sensor 126. In some embodiments, the second tow tensioner 124 is coupled to a fourth motor that moves the second tow tensioner 124 to control the distance between the second tow tensioner 124 and the second pulley 122. Increasing the distance between the second tow tensioner 124 and the second pulley 122 will increase the tension on the multi-filament tow 102 while decreasing the vertical distance between the second tow tensioner 124 and the second pulley 122 will decrease the tension on the multi-filament tow 102. In some embodiments, the second tow tensioner 124 moves in a substantially vertical direction.

The multi-filament tow 102 passes over a second tension sensor 126. In some embodiments, the second tension sensor 126 is a tension strain gauge coupled to an idler pulley which measures the force induced by the second tow tensioner 124. The multi-filament tow 102 then passes through a second pitch control 128 which allows the multiple filaments to spool onto the second spool 130 in a controlled manner preventing damage to the multi-filament tow 102 and allow the individual filaments to maintain their position relative to each other during re-spooling. In some embodiments, the second pitch control 128 comprises opposing pulleys or rollers. The multi-filament tow 102 passes in-between the pulleys or rollers. In some embodiments, the second pitch control 128 further comprises a sensor to measure the position of the multi-filament tow 102.

The multi-filament tow 102 is wound onto a second spool 130. The second spool 130 is coupled to a second motor 132 to rotate the spool and wind the multi-filament tow 102 onto the second spool 130. In some embodiments, the second spool is a large diameter spool which provides less bending stress on the multi-filament tow. Once the entire spool of multi-filament tow 102 has been inspected and repaired the spool can be further processed. For example, the inspected and repaired spook can be placed in a chemical vapor deposition chamber to deposit barrier materials on the filaments.

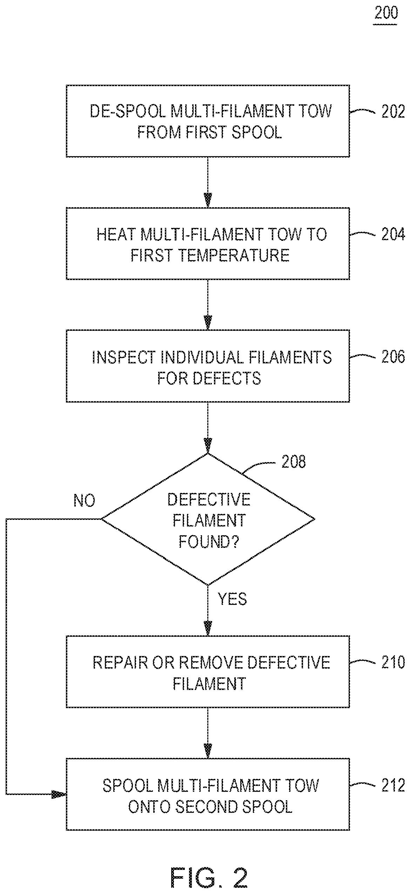

Figure 2 depicts a flowchart illustrating a method 200 of inspecting and repairing a multi-filament tow in accordance with some embodiments of the present disclosure. At 202, the multi-filament tow is de-spooled from the first spool. At 204, the multi-filament tow is heated to a first temperature of about 500 to about 1000 degrees Celsius to remove the polyvinyl acetate (PVA) coating on the multi-filament tow. The PVA coating removal may be accomplished, for example, as discussed above with respect to the de-sizing chamber 116.

At 206, individual filaments of the multi-filament tow are inspected for defects. The inspection of the filaments can be performed in the inspection chamber 118 as discussed above. For example, within the inspection chamber 118, the multi-filament tow 102 is inspected for defects such as breaks in individual filaments in the multi-filament tow 102. The inspection chamber 118 uses an optical detection process for identifying and quantifying defects in the multi-filament tow 102. In some embodiments, the defective filaments may be physically marked or the location of the defective filaments may be measured, for example in meters or other suitable units, and recorded.

At 208, it is determined if a defective filament has been found. If a defective filament has not been found, the multi-filament tow is spooled onto a second spool at 212. If a defective filament is found, the defective filament is repaired or removed at 210. The defective filament can be repaired or removed, for example, in the repair chamber 120 discussed above. In some embodiments, the defective filament, such as a broken filament, is removed from the multi-filament tow and guided to a reject path for disposal or, if possible, to be re-spooled and re-used.

## Claims

1. A system for inspecting and repairing a multi-filament tow, comprising:
a first spool having a multi-filament tow wound on the first spool;
a first tow tensioner following the first spool to impart a predetermined tension on the multi-filament tow;
a de-sizing chamber comprising a heater to heat the multi-filament tow to a first temperature suitable for removing a coating on the multi-filament tow;
an inspection chamber configured to inspect the multi-filament tow for defects;
a repair chamber configured to repair the defects in the multi-filament tow;
a second tow tensioner following the repair chamber to impart a predetermined tension on the multi-filament tow; and
a second spool following the second tow tensioner to collect the multi-filament tow.

2. The system of claim 1, further comprising a first motor coupled to the first spool to rotate the first spool and unwind the multi-filament tow from the first spool.

3. The system of claim 1, further comprising a first pitch control in-line with the first spool, between the first spool and the first tow tensioner, to allow the multi-filament tow to de-spool in a controlled manner.

4. The system of claim 3, wherein the first pitch control is a pair of opposing pulleys, wherein the first tow tensioner is a pulley, and wherein the second tow tensioner is a pulley.

5. The system of claim 3, further comprising a first tension sensor in-line with the first spool, between the first pitch control and the first tow tensioner to measure a force induced on the multi-filament tow by the first tow tensioner.

6. The system of any of claims 1 to 5, wherein the first tow tensioner is coupled to a third motor to move the first tow tensioner vertically to increase or decrease a first vertical distance between the first tow tensioner and the first spool.

7. The system of any of claims 1 to 5, further comprising a first pulley in-line with the first spool between the first tow tensioner and the de-sizing chamber.

8. The system of any of claims 1 to 5, wherein the first temperature is about 500 to about 1000 degrees Celsius.

9. The system of any of claims 1 to 5, further comprising a second pulley in-line with the first spool between the repair chamber and the second tow tensioner.

10. The system of claim 9, wherein the second tow tensioner is coupled to a fourth motor to move the second tow tensioner vertically to increase or decrease a second vertical distance between the second tow tensioner and the second pulley.

11. The system of claim 9, further comprising a second tension sensor in-line with the second pulley and following the second tow tensioner to measure a force induced on the multi-filament tow by the second tow tensioner.

12. The system of claim 11, further comprising a second pitch control in-line with the second pulley and following second tension sensor to allow the multi-filament tow to spool onto a second spool in a controlled manner.

13. The system of any of claims 1 to 5, further comprising a second motor coupled to the second spool to rotate the second spool and wind the multi-filament tow onto the second spool.

14. A method of inspecting and repairing a multi-filament tow, comprising:
de-spooling a multi-filament tow from a first spool;
heating the multi-filament tow to a first temperature suitable for removing a coating on the multi-filament tow in a de-sizing chamber;
inspecting individual filaments of the multi-filament tow for defects in an inspection chamber;
if a defective filament is found, repairing the defective filament in a repair chamber or removing the defective filament from the multi-filament tow; and
spooling the multi-filament tow exiting the repair chamber onto a second spool.

15. The method of claim 14, wherein the first temperature is about 500 to about 1000 degrees Celsius, and wherein removing the defective filament includes guiding the defective filament to a reject path for disposal.

## Patentansprüche

1. System zum Prüfen und Reparieren eines Multifilamentkabels, umfassend:
eine erste Spule mit einem Multifilamentkabel, das auf die erste Spule gewickelt ist;
einen ersten Kabelspanner, der der ersten Spule folgt, um dem Multifilamentkabel eine vorgegebene Spannung zu verleihen;
eine Entschlichtungskam mer, umfassend eine Heizvorrichtung zum Erwärmen des Multifilamentkabels auf eine erste Temperatur, die zum Entfernen einer Beschichtung auf dem Multifilamentkabel geeignet ist;
eine Prüfkammer, die konfiguriert ist zum Prüfen des Multifilamentkabels auf Fehler;
eine Reparaturkammer, die konfiguriert ist zum Reparieren der Fehler in dem Multifilamentkabel;
einen zweiten Kabelspanner, der auf die Reparaturkammer folgt, um dem Multifilamentkabel eine vorgegebene Spannung zu verleihen; und
eine zweite Spule, die auf den zweiten Kabelspanner folgt, um das Multifilamentkabel aufzunehmen.

2. System nach Anspruch 1, ferner umfassend einen ersten Motor, der mit der ersten Spule gekoppelt ist, um die erste Spule zu drehen und das Multifilamentkabel von der ersten Spule abzuwickeln.

3. System nach Anspruch 1, ferner umfassend eine erste Pitch-Steuerung in Reihe mit der ersten Spule, zwischen der ersten Spule und dem ersten Kabelspanner, um zu ermöglichen, dass das Multifilamentkabel in einer gesteuerten Weise abgewickelt wird.

4. System nach Anspruch 3, wobei die erste Pitch-Steuerung ein Paar gegenüberliegender Riemenscheiben ist, wobei der erste Kabelspanner eine Riemenscheibe ist und wobei der zweite Kabelspanner eine Riemenscheibe ist.

5. System nach Anspruch 3, ferner umfassend einen ersten Spannungssensor in Reihe mit der ersten Spule, zwischen der ersten Pitch-Steuerung und dem ersten Kabelspanner, um eine Kraft zu messen, die durch den ersten Kabelspanner auf dem Multifilamentkabel induziert wird.

6. System nach einem der Ansprüche 1 bis 5, wobei der erste Kabelspanner mit einem dritten Motor gekoppelt ist, um den ersten Kabelspanner vertikal zu bewegen, um einen ersten vertikalen Abstand zwischen dem ersten Kabelspanner und der ersten Spule zu vergrößern oder zu verkleinern.

7. System nach einem der Ansprüche 1 bis 5, ferner umfassend eine erste Riemenscheibe in Reihe mit der ersten Spule zwischen dem ersten Kabelspanner und der Entschlichtungskammer.

8. System nach einem der Ansprüche 1 bis 5, wobei die erste Temperatur etwa 500 bis etwa 1000 Grad Celsius beträgt.

9. System nach einem der Ansprüche 1 bis 5, ferner umfassend eine zweite Riemenscheibe in Reihe mit der ersten Spule zwischen der Reparaturkammer und dem zweiten Kabelspanner.

10. System nach Anspruch 9, wobei der zweite Kabelspanner mit einem vierten Motor gekoppelt ist, um den zweiten Kabelspanner vertikal zu bewegen, um einen zweiten vertikalen Abstand zwischen dem zweiten Kabelspanner und der zweiten Riemenscheibe zu vergrößern oder zu verkleinern.

11. System nach Anspruch 9, ferner umfassend einen zweiten Spannungssensor, der in Reihe mit der zweiten Riemenscheibe angeordnet ist und dem zweiten Kabelspanner folgt, um eine Kraft zu messen, die durch den zweiten Kabelspanner auf dem Multifilamentkabel induziert wird.

12. System nach Anspruch 11, ferner umfassend eine zweite Pitch-Steuerung in Reihe mit der zweiten Riemenscheibe und dem folgenden zweiten Spannungssensor, um zu ermöglichen, dass sich das Multifilamentkabel auf gesteuerte Weise auf eine zweite Spule aufwickelt.

13. System nach einem der Ansprüche 1 bis 5, ferner umfassend einen zweiten Motor, der mit der zweiten Spule gekoppelt ist, um die zweite Spule zu drehen und das Multifilamentkabel auf die zweite Spule aufzuwickeln.

14. Verfahren zum Prüfen und Reparieren eines Multifilamentkabels, umfassend:
Abwickeln eines Multifilamentkabels von einer ersten Spule;
Erwärmen des Multifilamentkabels auf eine erste Temperatur, die geeignet ist zum Entfernen einer Beschichtung auf dem Multifilamentkabel in einer Entschlichtungskammer;
Prüfen einzelner Filamente des Multifilamentkabels auf Fehler in einer Prüfkam m er;
wenn ein defektes Filament gefunden wird, Reparieren des defekten Filaments in einer Reparaturkammer oder Entfernen des defekten Filaments aus dem Multifilamentkabel; und
Aufwickeln des die Reparaturkammer verlassenden Multifilamentkabels auf eine zweite Spule.

15. Verfahren nach Anspruch 14, wobei die erste Temperatur etwa 500 bis etwa 1000 Grad Celsius beträgt und wobei das Entfernen des defekten Filaments das Führen des defekten Filaments zu einem Ausschusspfad zur Entsorgung beinhaltet.

## Revendications

1. Système pour inspecter et réparer un câble à filaments multiples, comprenant :
une première bobine ayant un câble à filaments multiples enroulé sur la première bobine ;
un premier tendeur de câble à la suite de la première bobine pour conférer une tension prédéterminée au câble à filaments multiples ;
une chambre de désencollage comprenant un élément chauffant pour chauffer le câble à filaments multiples jusqu'à une première température appropriée pour enlever un revêtement sur le câble à filaments multiples ;
une chambre d'inspection configurée afin d'inspecter le câble à filaments multiples à la recherche de défauts ;
une chambre de réparation configurée pour réparer les défauts dans le câble à filaments multiples ;
un deuxième tendeur de câble à la suite de la chambre de réparation pour conférer une tension prédéterminée au câble à filaments multiples ; et
une deuxième bobine à la suite du deuxième tendeur de câble pour collecter le câble à filaments multiples.

2. Système selon la revendication 1, comprenant en outre un premier moteur couplé à la première bobine pour faire tourner la première bobine et dérouler le câble à filaments multiples de la première bobine.

3. Système selon la revendication 1, comprenant en outre une première commande de pas en ligne avec la première bobine, entre la première bobine et le premier tendeur de câble, pour permettre au câble à filaments multiples de se débobiner d'une manière contrôlée.

4. Système selon la revendication 3, dans lequel la première commande de pas est une paire de poulies opposées, dans lequel le premier tendeur de câble est une poulie, et dans lequel le deuxième tendeur de câble est une poulie.

5. Système selon la revendication 3, comprenant en outre un premier capteur de tension en ligne avec la première bobine, entre la première commande de pas et le premier tendeur de câble pour mesurer une force induite sur le câble à filaments multiples par le premier tendeur de câble.

6. Système selon l'une des revendications 1 à 5, dans lequel le premier tendeur de câble est couplé à un troisième moteur pour déplacer le premier tendeur de câble verticalement pour augmenter ou réduire une première distance verticale entre le premier tendeur de câble et la première bobine.

7. Système selon l'une des revendications 1 à 5, comprenant en outre une première poulie en ligne avec la première bobine entre le premier tendeur de câble et la chambre de désencollage.

8. Système selon l'une des revendications 1 à 5, dans lequel la première température est d'environ 500 à environ 1000 degrés Celsius.

9. Système selon l'une des revendications 1 à 5, comprenant en outre une deuxième poulie en ligne avec la première bobine entre la chambre de réparation et le deuxième tendeur de câble.

10. Système selon la revendication 9, dans lequel le deuxième tendeur de câble est couplé à un quatrième moteur pour déplacer le deuxième tendeur de câble verticalement pour augmenter ou diminuer une deuxième distance verticale entre le deuxième tendeur de câble et la deuxième poulie.

11. Système selon la revendication 9, comprenant en outre un deuxième capteur de tension en ligne avec la deuxième poulie et à la suite du deuxième tendeur de câble pour mesurer une force induite sur le câble à filaments multiples par le deuxième tendeur de câble.

12. Système selon la revendication 11, comprenant en outre une deuxième commande de pas en ligne avec la deuxième poulie et à la suite du deuxième capteur de tension pour permettre au câble à filaments multiples de s'embobiner sur une deuxième bobine d'une manière contrôlée.

13. Système selon l'une des revendications 1 à 5, comprenant en outre un deuxième moteur couplé à la deuxième bobine pour faire tourner la deuxième bobine et enrouler le câble à filaments multiples sur la deuxième bobine.

14. Procédé d'inspection et de réparation d'un câble à filaments multiples, comprenant :
débobiner un câble à filaments multiples d'une première bobine ;
chauffer le câble à filaments multiples à une première température appropriée pour enlever un revêtement sur le câble à filaments multiples dans une chambre de désencollage ;
inspecter des filaments individuels du câble à filaments multiples à la recherche de défauts dans une chambre d'inspection ;
si un filament défectueux est trouvé, réparer le filament défectueux dans une chambre de réparation ou retirer le filament défectueux du câble à filaments multiples ; et
embobiner le câble à filaments multiples quittant la chambre de réparation sur une deuxième bobine.

15. Procédé selon la revendication 14, dans lequel la première température est d'environ 500 à environ 1000 degrés Celsius, et dans lequel l'enlèvement du filament défectueux inclut de mener le filament défectueux à un chemin de rejet pour mise au rebut.
